# EUROPEAN PATENT APPLICATION

(11) **EP 4 485 045 A1**
(43) Date of publication of application: **01.01.2025**
(21) Application number: 23864662.4
(22) Date of filing: 11.09.2023
(51) Int. Cl.: G02B 27/01

(54) **COMBINED SIGHTING SYSTEM AND OPTICAL SYSTEM THEREOF**

(30) Priority: 13.09.2022 WO PCT/CN2022/118295; 13.04.2023 CN 202320877731 U; 28.08.2023 CN 202322320633 U
(71) Applicant: Infiray Technologies Co., Ltd., Hefei, Anhui 230001 (CN)
(72) Inventor: HUANG, Wenbo, Hefei, Anhui 230001 (CN); TU, Jinchao, Hefei, Anhui 230001 (CN); QI, Dongdong, Hefei, Anhui 230001 (CN); LIU, Yufang, Hefei, Anhui 230001 (CN)
(74) Representative: Reiser & Partner Patentanwälte mbB
(86) International application number: PCT/CN2023/118014
(87) International publication number: WO 2024/055930

(57) **Abstract**

Provided in the present application are a combined sighting system and an optical system thereof. The optical system comprises a light incidence module, an imaging module and a visual pupil-expansion module. The light incidence module is used for collecting optical signals in a target field of view, such that the optical signals converge on the imaging module. The imaging module comprises an image processing unit and a display module, wherein the image processing unit is used for converting the optical signals into an image, and displaying the image by means of the display module. The visual pupil-expansion module comprises an optical waveguide assembly, wherein the optical waveguide assembly comprises an optical coupling-in area and an optical coupling-out area, which respectively correspond to the display module and an observation position, the image displayed in the display module is incident to the optical coupling-in area in the form of optical signals, is transmitted to the optical coupling-out area by means of the optical waveguide assembly, and is coupled out to the observation position from the optical coupling-out area.

## Description

### FIELD

The present application relates to the technical field of optical devices, and in particular to a combined sighting system and an optical system thereof.

### BACKGROUND

Currently, sights are widely used in optical sighting devices, such as shotguns. The optical system of the traditional sights has a small field of view and thus cannot observe a scene with a wider range. Moreover, the optical system of traditional optical sights has only one exit pupil with a fixed size. Whiling using the optical system, only the eye which is placed exactly at the position corresponding to the exit pupil, can see the image within the field of view completely. The eye cannot observe the complete field of view of the lens at any position other than the exit pupil. However, the exit pupil is generally small, that is, the movement range of the eye is small. Once the eye deviates from the position of the exit pupil, the eye will not be able to see the complete image. Therefore, it is needed for the user to find the position of the exit pupil and to maintain the same posture before sighting. This kind of operation way will have a certain impact on the hunting experience; moreover, during the shooting process, the relative position of the human eye and the sight can easily change due to the vibration of firearm. After each shot, the human eyes need to be repositioned on the exit pupil of the sight, which affects the shooting efficiency. In addition, the human eyes can only indirectly observe the external scenes through the sight while aiming, but this field of view is generally small, the human eyes cannot directly observe external scenes with a wide range, which results in poor perception of dynamic changes in the external world, and also affects the hunting experience.

### SUMMARY

In order to solve the existing technical problems, the embodiments of the application provide a combined sighting system and its optical system which can achieve an exit pupil expansion effect.

Embodiments of the application provide an optical system includes a light-entering module, an imaging module, and a pupil expansion visual module; wherein the light-entering module is configured to collect optical signals within a target field of view and to converge the optical signals to the imaging module; the imaging module includes an image processing unit and a display module, the image processing unit is configured to convert the optical signals into an image, and to display the image by the display module; the pupil expansion visual module includes an optical waveguide assembly, the optical waveguide assembly includes a light coupling-in region and a light coupling-out region respectively corresponding to the display module and an observation position, the image displayed in the display module is incident into the light coupling-in region in the form of an optical signal, and is transmitted to the light coupling-out region through the optical waveguide assembly, and is coupled out from the light coupling-out region to the observation position.

The embodiments of the application also provide a combined sighting system which includes an optical sighting device and the optical system described in any embodiment of the application.

In the optical system provided in the embodiments of the application, the optical waveguide assembly is provided in the pupil expansion visual module such that the optical signal of the displayed image in the imaging module is incident to the optical waveguide assembly, and the optical waveguide assembly transmits the optical signal of the image to the optical coupling-out region from which the optical signal is emitted to the rear observation position. The optical waveguide assembly is capable of receiving the optical signal of the image through a larger optical coupling-in region to thereby support reception of a relatively wider field of view of a scene, and copying the exit pupil position and realizing the function of the pupil expansion by using the optical waveguide transmission. The user can see the complete image in different directions at the observation position, thus the user is allowed to see the complete field of view of the sight within a larger range, whereby achieving the goal of a wider observation range.

The above embodiments including the combined sighting system and the embodiments including the corresponding optical system belong to the same concept, thus the embodiments including corresponding optical system have the same technical effect as the embodiment including combined sighting system, and it is not described again here.

### BRIEF DESCRIPTION OF THE DRAWINGS

Figure 1 is a schematic structural diagram of an optical system according to an embodiment of the present application;
Figure 2 is a schematic structural diagram of an optical system according to another embodiment of the present application;
Figure 3 is a schematic structural diagram of an optical system according to still another embodiment of the present application;
Figure 4 is a schematic structural diagram of an optical system according to yet another embodiment of the present application;
Figure 5 is a schematic structural diagram of an optical system according to even another embodiment of the present application;
Figure 6 is a schematic structural diagram of a sight imaging system according to an embodiment of the present application;
Figure 7 is a schematic diagram of the optical path of the sight imaging system shown in Figure 6;
Figure 8 is a schematic structural diagram of an optical waveguide assembly according to an embodiment of the present application;
Figure 9 is a schematic structural diagram of an optical waveguide assembly according to another embodiment of the present application;
Figure 10 is a schematic structural diagram of an optical waveguide assembly according to still another embodiment of the present application;
Figure 11 is a schematic structural diagram of an optical display device according to an embodiment of the present application;
Figure 12 is a schematic structural diagram of an optical display device according to another embodiment of the present application;
Figure 13 is a schematic structural diagram of an optical display device according to still another embodiment of the present application; and
Figure 14 is a schematic structural diagram of an optical display device according to yet another embodiment of the present application.

### Description of Element Signs:

light-entering module 11, primary reflective mirror 111, light-entering part 1113, light transmitting part 1114, secondary reflective mirror 112, objective lens 113, infrared objective lens 114, folding lens group 115, lens barrel 12, image processing unit 13, infrared image processor 131, display module 14, beam splitter prism assembly 15, light splitting surface 151, imaging module 16, aiming mark assembly 20 , aiming mark light source 21, light combiner 22, first light-entering surface 221, second light-entering surface 222, pupil expansion visual module 30, optical waveguide eyepiece 31, optical waveguide substrate 32, optical reflection plane 321, light coupling-in region 33, light coupling-out region 34, first optical diffraction element 351, second optical diffraction element 352, inclined reflective mirror 36, beam splitter array 37, beam splitter prism 371, optical waveguide assembly 39, observation position 40.

### DESCRIPTION OF THE EMBODIMENTS

The technical solution of the present application will be further described in detail below with reference to the accompanying drawings and specific embodiments of the description.

Unless otherwise defined, all used technical and scientific terms are the same as the meaning which is understood by those skilled in the art of the related to the technology of the present application. The used terminology herein in the description of the application is for the purpose of describing specific embodiments only and is not intended to limit the implementation of the application. As used herein, the term "and/or" includes any and all combinations of one or more of the associated listed items.

In the description of the present application, it should be understood that the terms "center", "upper", "lower", "front", "back", "left", "right", "vertical", "horizontal", "top", "bottom", "inner", "outer", etc indicating the orientations or positional relationships are based on the orientations or positional relationships shown in the drawings. They are only for the convenience of describing the present application and simplifying the description, and are not intended to indicate or imply that the devices or elements must have a specific orientation, and must be constructed and operated in a specific orientation and therefore are not to be construed as limitations of the application. In the description of the present application, unless otherwise specified, "a plurality of" means two or more.

In the description of the present application, it should be noted that, unless otherwise clearly stated and limited, the terms "installation", "connecting" and "connection" should be understood in a broad sense. For example, it can be a fixed connection or a detachable connection, or integral connection; it can be directly connected, or indirectly connected through an intermediary, or it can be communication between interiors of two components. For those of ordinary skill in the art, the specific meanings of the above terms in the present application can be understood on a case-by-case basis.

In the following description, expressions related to "some embodiments" describe a subset of all possible embodiments. It should be noted that "some embodiments" may be the same subset or different subsets of all possible embodiments, and the subset can be combined with each other without conflict.

In the optical system of traditional sights, the image usually has only one "exit" on the imaging optical path, called the exit pupil. That is, the human eye can only see the complete image at the exit pupil position, and cannot see the complete image if the human eye deviates from the exit pupil position. In order to make the image have a wider range of exit pupil, the image needs to be pupil expanded, the exit pupil can be copied multiple times through optical waveguide transmission, each exit pupil will output the same image, so that the human eye can see the complete image when it moves within a certain range, which is called pupil expansion.

Further, Pupil expansion includes one-dimensional pupil expansion and two-dimensional pupil expansion. Based on the structural design of the pupil expansion visual module mainly including an optical waveguide assembly, and by taking the purpose of pupil expansion can be achieved by using the optical waveguide assembly as an example, the optical waveguide assembly can include geometric optical waveguides (also called array optical waveguides) and diffraction optical waveguides. The mirror array is arranged on the light coupling-out region of the optical waveguide substrate for the geometric optical waveguide, to realize one-dimensional pupil expansion of the image along the arrangement direction of the mirror array. Taking the width and length directions of the optical waveguide substrate as an example, the light coupling-in region and the light coupling-out region are respectively arranged at both ends of the length direction of the optical waveguide substrate, the mirror array is arranged along the length direction of the optical waveguide substrate, which can realize one-dimensional pupil expansion of the image in the length direction of the optical waveguide substrate. Diffractive optical waveguides can realize one-dimensional pupil expansion or two-dimensional pupil expansion by utilizing grating structure to expand and couple the light beams according to different grating elements. For example, the optical grating element can include relief grating elements formed on an optical waveguide substrate using photolithography technology, and holographic grating elements manufactured based on holographic technology, by arranging the distribution of microstructures for controlling light deflection in the grating element, the light beams of the image can enter into and pass through different diffraction gratings, to realize the replication the exit pupil on the subregion along one dimension or two dimensions. Still taking the width direction and length direction of the optical waveguide substrate as an example, the light coupling-in region and the light coupling-out region are respectively arranged at both ends of the length direction of the optical waveguide substrate, the light coupling-in region and the light coupling-out region are respectively provided with grating elements, the distribution of the microstructure of the grating element can be utilized to realize one-dimensional pupil expansion of the image on the length direction of the optical waveguide substrate, or to achieve two-dimensional pupil expansion of the image on the width and length directions of the waveguide substrate.

It should be noted that the pupil expansion visual module may include based on the structural design of the optical waveguide assembly, one-dimensional pupil expansion is performed utilizing the optical waveguide assembly, and the purpose of more dimensional pupil expansion can be achieved by combining the optical waveguide assembly with other optical elements.

Secondly, sights usually include thermal sights and white light sights, the advantage of thermal sights is night hunting by integrating with the red dot aiming function and the prey can be clearly observed in a dark environment at night by utilizing the principles of thermal imaging, the advantage of the white light sight is that it can clearly observe prey at different distances through zooming, and the red dot aiming function facilitates the user to aim at the imaging object to improve the advantage of accurate shooting under any light conditions. In order to be compatible with the advantages of thermal imaging sights, white light sights and the red dot aiming function, it is necessary to fuse infrared light, visible light and red dot light before the human eye observes the image, the image is fused by using multi-channel optical signals (infrared light signals, visible light signals and red dot light signal) to make the sight to retain the multiple advantages of infrared night vision, white light zoom and image details, and red dot aiming function at the same time. Multi-channel optical signal fusion includes two-light fusion of visible light and red dot light, two-light fusion of infrared light and red dot light, and three-light fusion of infrared light, visible light and red dot light. In this application, under the technical concept based on the structural design of the pupil expansion visual module including the optical waveguide assembly, the multi-channel optical signals to be fused are synchronously incident into the optical waveguide substrate in the light coupling-in region or in the light coupling-out region of the optical waveguide assembly, optical waveguide transmission is utilized to replace the traditional complex image transfer system of the mirror to complete the fusion, which can simplify the structure of the sight and achieve a purpose of an overall lightweight.

In addition, based on the structural design of the pupil expansion visual module which mainly includes optical waveguide assembly, the incidence of optical signals in the imaging optical path can be optimized to shorten the imaging optical path and to reduce the length of the optical axis along the incident optical signal of the optical system of the sight, to realize a more compact structure, to reduce the size and to improve the lightweight can be achieved.

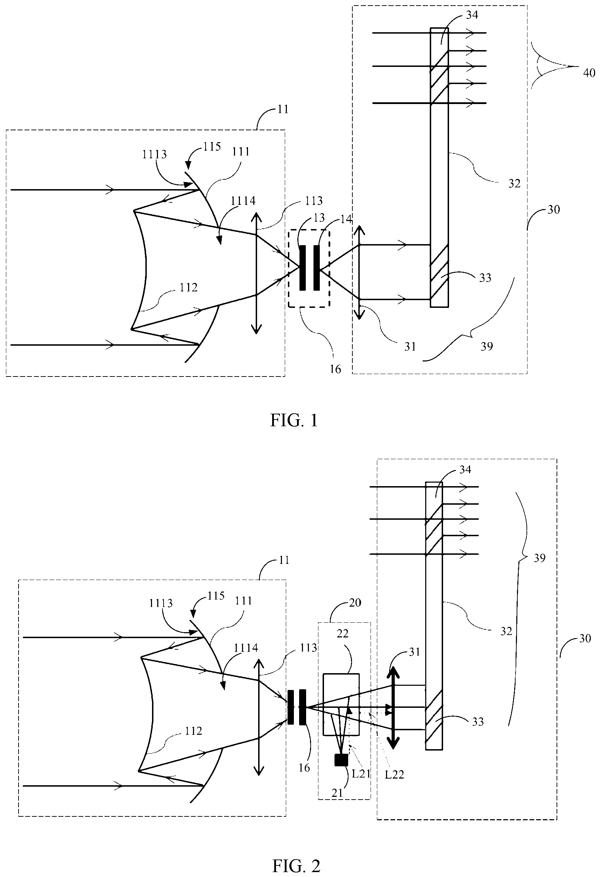

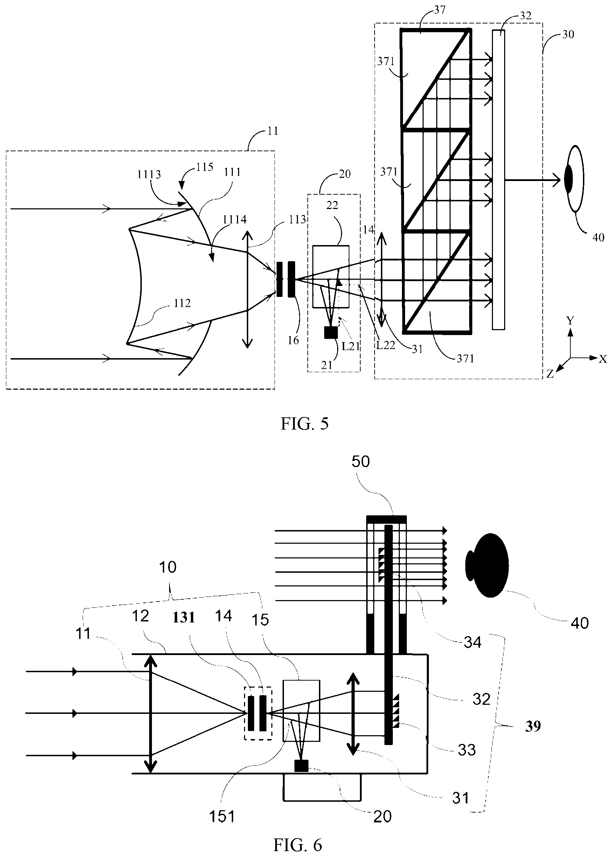

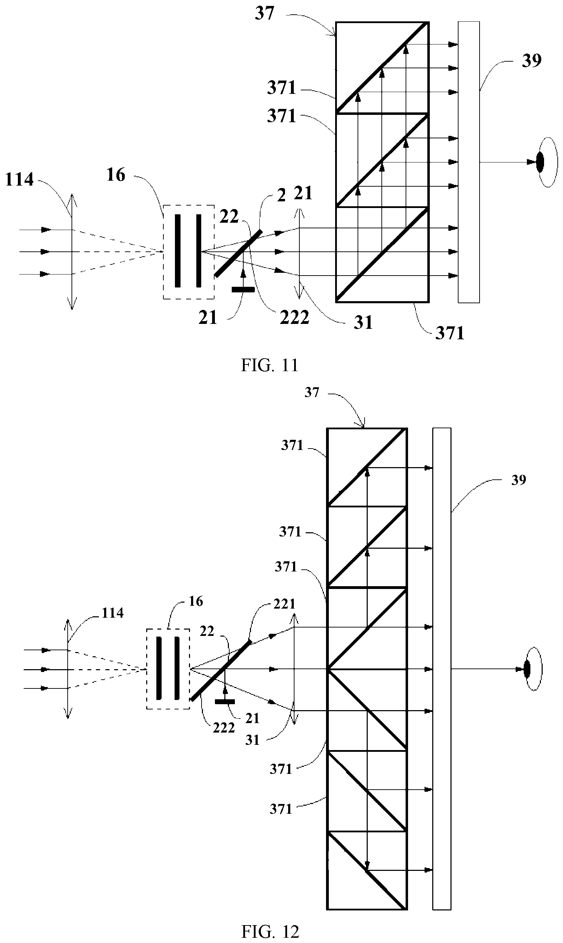

Based on the structural design of the pupil expansion visual module which mainly includes the optical waveguide assembly, the structural assembly of the optical system mainly includes an light-entering module, an imaging module and a pupil expansion visual module. The light-entering module is configured to collect optical signals within a target field of view and to converge the optical signals to the imaging module. The imaging module converts the optical signal into an image through the image processing unit, and the image is displayed by the display module. The pupil expansion visual module includes an optical waveguide assembly arranged behind the display module. The displayed image in the display module is incident into the optical waveguide assembly in the form of an optical signal, and is transmitted through the optical waveguide assembly, to realize that the light of the image is couple out after the replication of the pupil on the subregion on one dimension or two dimensions. Based on the structural design of the pupil expansion visual module which mainly includes the optical waveguide assembly, the optical system of the sight can have a variety of different specific implementation methods. For example, the pupil expansion visual module mainly includes an optical waveguide assembly, on the basis of utilizing optical waveguide transmission to achieve pupil expansion, combined with a folding lens group, the incident of optical signal to be imaged forms a reciprocal folding optical path, to reduce the length of the optical axis along the direction of incident optical signals of the optical system of the sight, the purpose of making the structure more compact, reducing the size and further improving the lightweight (taking the description of the optical system embodiments shown in Figures 1 to 5 as an example) can be realized, or, the pupil expansion visual module is based on a structure of mainly including the optical waveguide assembly, and the fusion of multi-channel optical signals (take the description of the embodiment of the sight imaging system shown in FIG. 6 to FIG. 10 as an example) is further realized by utilizing the principle of optical waveguide transmission; or , the pupil expansion visual module is based on a structure of mainly including the optical waveguide assembly, and the purpose of more dimensional pupil expansion (taking the description of the embodiments of the optical display device shown in FIG. 11 to FIG. 14 as an example) is realized by further combining with a beam splitter array to reduce the difficulty of structural design of the optical waveguide assembly themselves.

Referring to FIG. 1 to FIG. 5, an optical system according to an embodiment of the present application is applicable for a sight. The optical system includes a light-entering module 11, an imaging module 16 and a pupil expansion vision module 30. The light-entering module 11 is configured to collect optical signals within the target field of view and to converge the optical signals to the imaging module 16. The light-entering module 11 includes a folding lens group 115 and an objective lens 113, and the folding lens group 115 is configured to reflect the incident optical signals multiple times to form a folded optical path, the optical signals are finally reflected to the objective lens 113. The optical signals are emitted to the imaging module 16 after being refracted and converged by the objective lens 113. The imaging module 16 includes an image processing unit 13 and a display module 14. The image processing unit 13 is configured to convert the optical signal into an image which is displayed by the display module 14. The pupil expansion visual module 30 includes an optical waveguide assembly 39, and the optical waveguide assembly 39 includes a light coupling-in region 33 and a light coupling-out region 34 respectively corresponding to the display module 14 and the observation position 40. The displayed image in the display module 14 is incident into the light coupling-in region 33 in the form of an optical signal, and is transmitted to the light coupling-out region 34 through the optical waveguide assembly 39, and is coupled out from the light coupling-out region 34 to the observation position 40.

The folding lens group 115 reflects the incident optical signal multiple times to form a folded optical path, which means that along the incident direction of the optical signal, at least a traveling path of the optical signal opposite to the incident direction is formed due to the reflection of the folding lens group 115 before the optical signal to be imaged is converged to the imaging module 16. The formation of the folded optical path can effectively increase the transmission path length of the optical signal to be imaged within a certain distance along the incident direction of the optical signal (such as a distance between the primary reflective mirror 111 and the secondary reflective mirror 112 of the folding lens group 115) and reduce the optical axis length of the optical system in the incident direction of the optical signal.

In the above embodiment, the light-entering module 11 is provided in front of the imaging optical path of the optical system. The light-entering module 11 includes the folding lens group 115 and the objective lens 113. The incident optical signal is reflected multiple times by the folding lens group 115 to form a folded optical path, and then reflected to the objective lens 113, and is finally emitted to the imaging module 16 after being refracted and converged by the objective lens 113. The imaging module 16 generates an image and displays it. The incident optical signal is formed into the folded optical path by the folding lens group 115 and is then converged to the imaging module 16, which is beneficial to correcting aberrations, shortening the imaging optical path, and reducing the length of the optical axis of the optical system along the incident direction of the optical signal. The optical signal of the image displayed by the imaging module 16 is incident into the optical waveguide assembly 39 which transmits the optical signal of the image to the light coupling-out region 34. The optical signal of the image is then emitted from the coupling-out region 34 to the observation position 40 located in rear of the coupling-out region 34. The optical waveguide assembly 39 can receive the optical signal of the image through the light coupling-in region 33 with a larger area, so that it can support receiving a relatively larger field of view of the scene, and the exit pupil position can be replicated and the pupil expansion function can be realized by using optical waveguide transmission. The user can see the complete fused image in different directions at the observation position 40. Thus the user can see a complete image within a wider range, and the purpose of widening observation range is realized.

The imaging module 16 includes the image processing unit 13 and the display module 14. The image processing unit 13 is configured to receive the optical signal collected by the light-entering module 11 and converged through the objective lens 113, and convert the optical signal into an electrical signal which is further processed to form an image displayed by the display module 14. It should be noted that in the embodiment of the present application, the imaging optical path indicates the optical path in which the optical signal is imaged by the imaging module 16 and the image is displayed by the display module 14. The optical signal may be a visible light signal, or infrared light signal. The image processing unit 13 includes an image sensor and an image processor. The objective lens 113, the image sensor and the display module 14 are arranged in sequence along the incident direction of the optical signal. The objective lens 113 and the image sensor are selected according to the type of the optical signal to be imaged. For example, if the optical signal in the imaging light path refers to a visible light signal, then the objective lens 113 and the image sensor are correspondingly a white light objective lens and a visible light sensor, and multi-channel optical signal fusion of the optical system of the sight mainly refers to the dual-light fusion of visible light and optical signal of an aiming mark. If the optical signal in the imaging light path refers to infrared light signal, the objective lens 113 and the image sensor are correspondingly infrared objective lenses and infrared sensors, and multi-channel optical signal fusion of the optical system of the sight may be dual-light fusion of infrared light and optical signal of the aiming mark, or three-light fusion of infrared light, visible light and optical signal of the aiming mark.

In some embodiments, the folding lens group 115 includes a primary reflective mirror 111 and a secondary reflective mirror 112. The secondary reflective mirror 112, the primary reflective mirror 111 and the objective lens 113 are arranged in sequence along the incident direction of the optical signal. The primary reflective mirror 111 includes a light-entering part 1113 and a light transmitting part 1114. The light-entering part 1113 is configured to receive the incident optical signal and reflect the optical signal to the secondary reflective mirror 112. The secondary reflective mirror 112 is configured to reflect the optical signal reflected by the light-entering part 1113 toward the light transmitting part 1114 such that the optical signal is transmitted to the objective lens 113 after passing through the light transmitting part 1114. Along the incident direction of the optical signal to be imaged, the secondary reflective mirror 112 is arranged in front of the primary reflective mirror 111. The primary reflective mirror 111 includes the light-entering part 1113 for receiving the optical signal of the incident light and the light transmitting part 1114 for allowing the finally reflected light to pass therethrough. The light-entering part 1113 reflects the incident optical signal to the secondary reflective mirror 112, and the secondary reflective mirror 112 reflects again the optical signal, reflected by the light-entering part 1113 to the surface of the secondary reflective mirror 112, to the light transmitting part 1114 of the primary reflective mirror 111, and the optical signal transmits through the light transmitting part 1114 and then reaches the objective lens 113. Thus, the optical signal is reflected twice by the primary reflective mirror 111 and the secondary reflective mirror 112 respectively, and a folded optical path is formed. In addition, the primary reflective mirror 111 can increase the incident area for receiving optical signals by using the light-entering part 1113, which facilitates to collect the optical signals within a wider field of view for the scene within the target field of view. The optical signal to be imaged may be a visible light signal or an infrared light signal, the materials of the primary reflective mirror 111 and the secondary reflective mirror 112 match the type of the optical signal of the imaging optical path. If the optical signal to be imaged is a visible light signal, then the primary reflective mirror 111 and the secondary reflective mirror112 should be made of materials that can reflect visible light signals, if the imaged optical signal is an infrared light signal, the primary reflective mirror 111 and the secondary reflective mirror 112 should be made of materials that can reflect infrared light signals.

In some embodiments, the size of the primary reflective mirror 111 in a radial direction is larger than that of the secondary reflective mirror 112, and the part of the primary reflective mirror 111 that extends beyond the secondary reflective mirror 112 in the radial direction is formed as the light-entering part 1113. The secondary reflective mirror 112 and the primary reflective mirror 111 are coaxially arranged. The primary reflective mirror 111 includes a central portion corresponding to the secondary reflective mirror 112 along the incident direction of the imaged optical signal and a peripheral portion surrounding the central portion, the central portion is aligned with the secondary reflective mirror 112, and the size of the central part is usually equal to or slightly smaller than the size of the secondary reflective mirror 112. The peripheral part acts as the light-entering part 1113 of the primary reflective mirror 111.

In some embodiments, both the primary reflective mirror 111 and the secondary reflective mirror 112 are curved lenses, a side of the primary reflective mirror 111 facing the incident optical signal is concave, and a side of the secondary reflective mirror 112 facing the primary reflective mirror 111 is convex. The light transmitting part 1114 includes a perforation aligned with the secondary reflective mirror 112 and the objective lens 113 in the optical axis direction, and the size of the perforation is smaller than or equal to the secondary reflective mirror 112. The perforation is aligned with the secondary reflective mirror 112 and the objective lens 113, which means that the position and the size of the perforation are determined according to a position and a size of the first light spot which is formed by the light reflected from the secondary reflective mirror 112 when passing through the position of the primary reflective mirror 111, and a position and a size of the objective lens 113 are determined based on the position and size of the second light spot which is formed by the light reflected from the secondary reflective mirror 112 when passing through the position of the objective lens 113. In this embodiment, axial centers of the secondary reflective mirror 112, the perforation and the objective lens 113 are located on the same axis, and the size of the perforation is smaller than or equal to the size of the secondary reflective mirror 112, the size of the objective lens 113 is larger than the size of the perforation. The primary reflective mirror 111 and the secondary reflective mirror 112 are respectively configured as reflective mirrors with a certain degree of curvature, which facilitates to correct aberrations by using the reflection of the curved surface. The optical signals reflected twice by a group of curved surface of the primary reflective mirror 111 and the secondary reflective mirror 112 can be directed to the objective lens 113 in a more concentrated way, which has a better effect on reducing the length of the optical axis of the optical system along the incident direction of the optical signal.

In some embodiments, the optical waveguide assembly 39 includes an optical waveguide eyepiece 31 and an optical waveguide substrate 32. The light coupling-in region 33 and the light coupling-out region 34 are respectively formed at opposite ends of the optical waveguide substrate 32. The optical waveguide eyepiece 31 is arranged at the front of the optical input region 33, and is configured to amplify and convert the optical signal of the image displayed in the display module 14 into a parallel optical signal. The optical waveguide eyepiece 31 is arranged between the display module 14 and the light coupling-in region 33. The optical signal of the displayed image in the display module 14 is emitted to the optical waveguide eyepiece 31, and amplified and converted into parallel light through the optical waveguide eyepiece 31 and the parallel light is emitted to the waveguide substrate 32. The light coupling-out region 34 and the light coupling-in region 33 are respectively arranged at opposite ends of the optical waveguide substrate 32, the position of the exit pupil can be arranged more flexibly by using optical waveguide transmission, and the observation position 40 of the human eye is arranged in rear of the light coupling-out region 34. The exit pupil is no longer limited to the rear of the imaging light path.

In some embodiments, please refer to FIG.2, the optical system further includes an aiming mark assembly 20 which includes a light combiner 22 and an aiming mark light source 21. The light combiner 22 is arranged between the display module 14 of the imaging module 16 and the optical waveguide eyepiece 31, and includes a first light-entering surface and a second light-entering surface facing the display module 14 and the aiming mark light source 21 respectively. The displayed image in the display module 14 is emitted to the first light-entering surface in the form of an optical signal, and is transmitted through the light combiner 22 and is emitted to the optical waveguide eyepiece 31. The aiming mark optical signal emitted by the aiming mark light source 21 is incident to the second light-entering surface, and then emitted to the optical waveguide eyepiece 31 after being reflected by the second light-entering surface. The light combiner 22 is configured to allow light of different spectra to be transmitted or reflected while the light reaches the light combiner 22, so as to adjust the transmission optical path of the aiming mark optical signal. The first light-entering surface may be provided with a light-transmitting coating for transmitting the optical signal of the image, the second light-entering surface may be provided with a reflective coating which is capable of reflecting the aiming mark optical signal to change its original transmission direction such that the reflected aiming mark optical signal can be merged with the optical signal transmitted through the first light-entering surface. The light transmitting coating and the reflective coating can respectively realize the transmission and reflection functions of the corresponding light by utilizing the different spectral ranges of different lights. For example, the spectral range of the optical signal to be imaged is A, and the spectral range of the aiming mark optical signal is B, the light transmitting coating realizes high transmittance for light in the spectral range A and high reflectivity for light outside the spectral range A; the reflective coating realizes high reflectivity for light in the spectral range B and high transmittance for light in the spectral range A.

In one illustrative embodiment, the aiming mark light source 21 is a red point light source, and the aiming mark optical signal is a red point optical signal. It should be noted that using a red light point source as the aiming mark light source 21 is a relatively common method used in the field of sights, but any light source having the function of aiming mark can be used, and the aiming mark light source 21 is not limited to red light point sources.

The incident direction in which the optical signal of the image is incident to the first light-entering surface and the incident direction in which the aiming mark optical signal is incident to the second light-entering surface are perpendicular to each other. The aiming mark optical signal emitted by the aiming mark light source 21 is incident to the second light-entering surface along a direction perpendicular to the original transmission direction of the imaging light path, and after being reflected and adjusted by the second light-entering surface, is transmitted along the same path as the imaging optical path, that is to say that the aiming mark image of the aiming mark optical signal is superimposed on the displayed image in the display module 14, and the superimposed images are then jointly emitted to the optical waveguide eyepiece 31. As shown in FIG.2, L21 represents the original transmission direction of the aiming mark optical signal, and L22 represents the reflected transmission direction of the aiming mark optical signal. In a preferred example, the light combiner 22 is a beam splitter prism assembly. The beam splitter prism assembly is rectangular as a whole and includes a light-entering surface facing the display module 14, a light exit surface facing the optical waveguide assembly 39, and a light splitting surface obliquely connected between the light-entering surface and the light exit surface. A projection of the light splitting surface on the light-entering surface is greater than or equal to a projection of the display module 14 on the light-entering surface. In this embodiment, the size of the light-entering surface is larger than the size of the display module 14, the first intersection position of the light splitting surface and the light-entering surface is flush with the bottom surface of the display module 14, and the second intersection position of the light splitting surface and the light exit surface is flush with the top surface of the display module 14, so that a first distance is formed between the first intersection position and the bottom surface of the beam splitter prism assembly, and a second distance is formed between the second intersection position and the top surface of the beam splitter prism assembly. Thus, the emission range of the optical signal of the infrared image displayed in the display module 14 is within the light transmission adjustment range of the light transmitting coating of the light splitting surface, and the mechanical strength of the beam splitter prism assembly can be increased.

In some embodiments, the optical system further includes a light entrance window corresponding to the light coupling-out region 34. The light coupling-out region 34 allows the optical signal entering from the light entrance window to be transmitted through, so that the target field of view can be directly observed through the light coupling-out region 34 and the light entrance window while the image of the target field of view formed by the imaging module 16 is being observed at the observation position 40. The optical system includes a housing in which the optical components such as the light-entering module 11, the imaging module 16, and the pupil expansion visual module 30 are received. A part, corresponding to the light coupling-out region 34, at one side of the housing facing the incident direction of the optical signal defines the light entrance window, so that the visible light signal in the target field of view can enter the housing via the light entrance window, and transmit through the light coupling-out region 34. The visible light of the target field of view can be directly superimposed on the image emitted from the light coupling-out region 34, so as to realize the fusion of multi-channel optical signals, for example, the optical signal in the imaging optical path refers to infrared light, and the fusion of multi-channel optical signals refers to the three-light fusion of infrared light, visible light and aiming mark light.

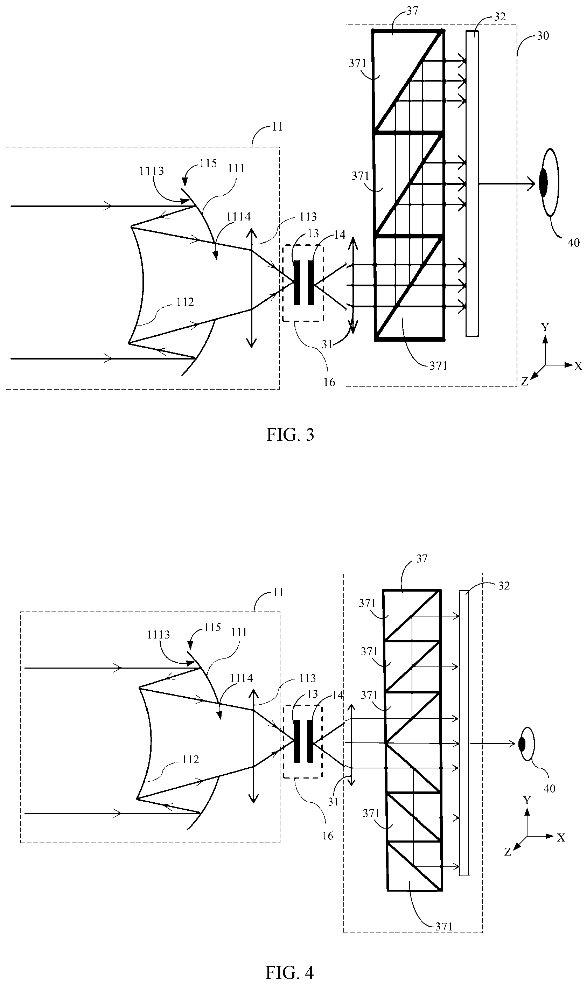

In some embodiments, please refer to FIG.3, the pupil expansion visual module further includes a beam splitter array 37, and the optical waveguide assembly 39 and the beam splitter array 37 cooperatively form a two-dimensional pupil expansion module. The beam splitter array 37 is arranged between the optical waveguide eyepiece 31 and the optical waveguide substrate 32.

The beam splitter array 37 includes a beam splitter prism group which includes a plurality of beam splitter prisms 371 sequentially arranged in one direction along a first dimension. Taking the optical signal transmission direction in the optical waveguide substrate 32 as a reference dimension, the first dimension is perpendicular to the reference dimension. As shown in FIG. 3, the incident direction of the optical signal is defined as the X direction, the reference dimension refers to the Z direction which is perpendicular to the paper surface, the first dimension refers to the Y direction which is perpendicular to the X direction and the Z direction, and the size of the beam splitter array 37 in the first dimension is substantially the same as the size of the optical waveguide substrate 32 in the first dimension, a light coupling-in region extending along the first dimensional direction is formed on the side of the optical waveguide substrate 32 facing the beam splitter array 37. The beam splitter array 37 includes a light-entering surface aligned with the optical waveguide eyepiece 31 and a light output surface aligned with the light coupling-out region of the optical waveguide substrate 32. In the beam splitter prism group, one of the beam splitter prisms 371 is aligned with the optical waveguide eyepiece 31 and configured to receive the incident light beam calibrated and transmitted by the optical waveguide eyepiece 31, transmit one part of the incident light beam through the light output surface of the beam splitter array 37 along its original incident direction i.e., the incident direction of the optical signal, and reflect the other part of the incident light beam to the adjacent beam splitter prism 371 along the direction (i.e., the first dimensional direction) perpendicular to the original incident direction. The adjacent beam splitter prism 371 transmits a part of the reflected light beam to a next adjacent beam splitter prism 371 along its original incident direction i.e., the first dimensional direction, reflects the other part of the reflected light beam out of the light output surface of the beam splitter array 37 along a direction (i.e., the incident direction of the optical signal or the X direction) perpendicular to its original incident direction; and so on, until the outermost beam splitter prism 371 in the first dimensional direction reflects all the received reflected light beam out of the light output surface of the outmost beam splitter array 37. In this way, after the multiple beam splitter prisms 371 complete the amplification of the incident light beam, which is emitted after being calibrated by the optical waveguide eyepiece 31, in the first dimensional direction, the expanded incident light beams emerges from the light output surface of the beam splitter array 37, enters into the optical waveguide substrate 32 through the optical coupling input region, and is expanded in the Z direction by the optical waveguide substrate 32 through optical waveguide transmission. The expanded light beams are transmitted to the observation position 40.

It should be noted that the number of the beam splitter prism groups in the beam splitter array 37 is not limited to one. Please refer to FIG.4, the beam splitter array 37 includes two beam splitter prism groups symmetrically arranged along the first dimension. Each beam splitter prism group includes a plurality of beam splitter prisms 371 arranged sequentially in one direction along the first dimension. The beam splitter prisms 371 in the two beam splitter prism groups that receive the incident light beam emitted after being calibrated by the optical waveguide eyepiece contact each other. The principle of reflection and transmission of the two beam splitter prism groups is the same as that mentioned above and not repeated here. The incident light beam emitted after being calibrated by the optical waveguide eyepiece 31 is simultaneously expanded from the intermediate position aligned with the optical waveguide eyepiece 31 to both sides of the beam splitter array 37 in the first dimension.

In some embodiments, the optical system includes both the aiming mark assembly 20 and the two-dimensional pupil expansion module as shown in FIG.5, so that the optical system maintains an improved optical axis length by arranging the folding lens group 115, and realizes the pupil expansion function and fusion of multi-channel optical signals by using optical waveguide transmission of the optical waveguide assembly 39. In this way, the optical system further has a red dot aiming function, and with the help of a combination of the optical waveguide assembly 39 and the beam splitter array 37, the purpose of more dimensional pupil expansion on the basis of effectively reducing the design and manufacturing difficulty of the optical waveguide assembly 39 itself can be realized.

Referring to Figures 6 to 10, taking the specific implementation of the optical system as a sight imaging system described in the following embodiments as an example, the imaging module 16 is an infrared imaging module, and the optical signal in the imaging light path is infrared light, the light-entering module 11 mainly includes an infrared objective lens 114, and the infrared objective lens 114 and the imaging module 16 cooperatively form the infrared light assembly 10 of the sight imaging system.

Referring to FIG.6 which is a schematic diagram of an imaging system of a sight according to an embodiment of the present application, the imaging system of the sight includes an infrared light assembly 10, an aiming mark assembly 20 and an optical waveguide assembly 39. The infrared light assembly 10 includes a display module 14 arranged on an infrared image imaging path L1. The infrared light assembly 10 is configured to obtain the infrared light signal within the target field of view, and generate an infrared image displayed in the display module 14 according to the infrared light signal. The aiming mark assembly 20 is configured to emit the aiming mark optical signal. The aiming mark optical signal and the optical signal of the infrared image displayed in the display module 14 are commonly transmitted along the infrared image imaging path L1 , transmitting from the infrared image imaging path L1 to the optical waveguide assembly 39. The optical waveguide assembly 39 includes a light coupling-in region 33 arranged on the infrared image imaging path L1 and a light coupling-out region 34 arranged on the visible light image imaging path L3, the light coupling-in region 33 corresponds to the display module 14. The aiming mark optical signal and/or the infrared image displayed in the display module 14 are incident into the light coupling-in region 33 in the form of an optical signal, transmitted to the optical coupling output region 34 through the optical waveguide assembly 39, fused with the visible light signal transmitted along the visible light image imaging path L3 in the optical coupling output region 34, and are coupled out to the observation position 40 through optical coupling output region 34.

The sight imaging system provided in the above embodiment utilizes an optical waveguide to transmit the infrared image and the aiming mark optical signal, so as to change the transmission directions of the infrared image optical signal and the aiming mark optical signal until the transmission directions of the infrared image optical signal and the aiming mark optical signal are coincide with the visible light image imaging path L3 such that the infrared image optical signal, the aiming mark optical signal and the visible light signal are fused and emitted to the observation position 40. Replacing the traditional complex reflective mirror imaging system with an optical waveguide to realize multi-channel optical signal fusion of infrared light, visible light and aiming mark light, the structure of the sight imaging system can be greatly simplified and an overall lightweight purpose can be realized. The optical waveguide assembly 39 can receive optical signals through the light coupling-in region 33 with a larger area, to thereby receive a wider scene field of view. The optical waveguide assembly 39 has a multi-dimensional pupil expansion function, and the user can see a complete fusion image at the observation position 40 in different directions, whereby allowing the user to see the complete field of view of the sight in a larger range, and realizing the purpose of the multi-dimensional exit pupil observation.

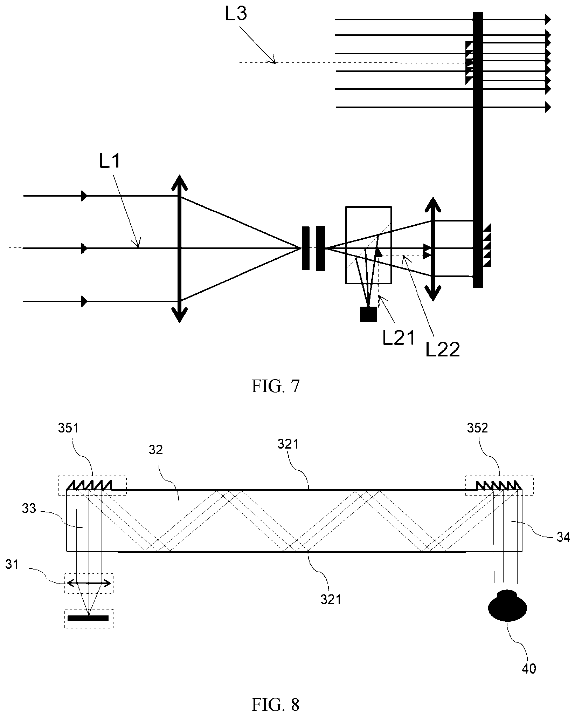

Referring to FIG. 7 which is a schematic diagram of the optical path principle of the sight imaging system, the incident direction and transmission direction of the visible light signal are aligned with the observation position 40, that is, the visible light image imaging path L3 and the observation position 40 are located on the same straight line. The infrared image imaging path L1 and the visible light image imaging path L3 are parallel to each other. The optical waveguide assembly 39 is arranged perpendicular to the visible light image imaging path L3 and the infrared image imaging path L1, the light coupling-in region 33 of the optical waveguide assembly 39 is arranged at the rear end of the infrared image imaging path L1, the light coupling-out region 34 is arranged at the rear end of the visible light image imaging path L3. The original transmission direction L21 of the aiming mark optical signal is perpendicular to the infrared image imaging path L1. After being changed the direction, the aiming mark optical signal is fused with the optical signal of the infrared image displayed in the display module 14. The aiming mark optical signal and the optical signal of the infrared image are transmitted along the same optical path, i.e., the infrared image imaging path L1, and then are jointly emitted to the light coupling-in region 33 arranged at the rear end of the infrared image imaging path L1, enter into the optical waveguide assembly 39 through the light coupling-in region 33, and are transmitted to the light coupling-out region 34 after multiple total reflections in the optical waveguide assembly 39, and finally are fused with the visible light signal transmitted through the optical output region 34 along the visible light image imaging path L3. In this way, by utilizing the characteristics of the optical waveguide assembly 39 guiding the transmission of light waves within optical waveguide assembly 39, the transmission light paths of the infrared image optical signal, the aiming mark optical signal and the visible light signal are finally converged such that the infrared image optical signal, the aiming mark optical signal and the visible light signal are emitted together toward the observation position 40.

In some embodiments, the infrared light assembly 10 includes a beam splitter prism assembly 15 arranged between the display module 14 and the light coupling-in region 33 of the optical waveguide assembly 39. The beam splitter prism assembly 15 has an inclined light splitting surface 151, the display module 14 and the aiming mark assembly 20 are respectively arranged on opposite sides of the light splitting surface 151. The transmission optical path of the aiming mark optical signal can be adjusted through the light splitting surface 151, so that the aiming mark optical signal and the optical signal of the infrared image are transmitted along a common optical path i.e., the infrared image imaging path L1. The beam splitter prism assembly 15 is configured to allow light of different spectra to be transmitted or reflected when the light of different spectra pass through the beam splitter prism assembly 15, to adjust the transmission optical path of the aiming mark optical signal, so that the aiming mark optical signal emitted along the original transmission direction L21 perpendicular to the infrared image imaging path L1 is adjusted by the light splitting surface 151 to form the reflected transmission direction L22 of the aiming mark optical signal. The reflected aiming mark optical signal and the infrared image are transmitted along the same optical path i.e., the infrared image imaging path L1, which is equivalent to the image of the aiming mark of the aiming mark optical signal being superimposed on the infrared image displayed in the display module 14. It should be noted that in different specific implementations of the optical system, the same optical elements may be grouped in different ways, but the different grouping ways do not affect that they actually refer to the same optical element with the same optical element in the optical system. For example, in the embodiment in which the optical system is the sight imaging system, beam splitter prism assembly 15 in the infrared light assembly 10 acts as the light combiner 22 in the aiming mark assembly 20.

Optionally, a side of the light splitting surface 151 facing the display module 14 is provided with a light-transmitting coating, and the other side facing the aiming mark assembly 20 is provided with a reflective coating. The infrared image displayed in the display module 14 is incident to and transmitted through the light-transmitting coating in the form of an optical signal, the aiming mark optical signal emitted by the aiming mark assembly 20 is incident to the reflective coating, and the aiming mark optical signal is reflected by the reflective coating and then transmitted along the common optical path of the infrared image imaging path L1. The beam splitter prism assembly 15 transmits the optical signal of the infrared image of the infrared assembly and reflects the optical signal of the aiming mark of the aiming mark assembly 20, so that the optical signal of the infrared image and the optical signal of the aiming mark are fused in the infrared light channel after passing through the beam splitter prism assembly 15. The beam splitter prism assembly 15 is rectangular as a whole, and includes the light-entering surface facing the display module 14 and the light exit surface facing the light waveguide assembly 39, the light splitting surface 151 is obliquely connected between the light-entering surface and the light exit surface. The projection of the light splitting surface 151 on the light-entering surface is greater than or equal to the projection of the display module 14 on the light-entering surface. In this embodiment, a size of the light-entering surface is larger than that of the display module 14 , the first intersection position of the light splitting surface 151 and the light-entering surface is flush with the bottom surface of the display module 14, and the second intersection position of the light splitting surface 151 and the light exit surface is flush with the top surface of the display module 14, so that a first distance is formed between the first intersection position and the bottom surface of the beam splitter prism assembly 15, and a second distance is formed between the second intersection position and the top surface of the beam splitter prism assembly 15, so that the emission range of the optical signal of the infrared image displayed in the display module 14 is within the light transmission adjustment range of the light-transmitting coating of the light splitting surface 151, and the mechanical strength of the beam splitter prism assembly 15 can be increased.

The light-transmitting coating and the reflective coating can respectively utilize the different spectral ranges of different lights to realize the transmission and reflection functions of the corresponding light. In an optional example, the spectral range of visible light is A, the spectral range of infrared light is B, the spectral range of the aiming mark optical signal is C, and the light-transmitting coating has high transmittance for the light in the spectral range B, and has high reflectivity for light outside the spectral range B; the reflective coating has high reflectivity for light in the spectral range C and high transmittance for light in the spectral range B.

Optionally, the incident direction of the aiming mark optical signal from the aiming mark assembly 20 incident to the light splitting surface 151 and the incident direction of the optical signal of the infrared image in the display module 14 incident to the light splitting surface 151 are perpendicular to each other. The aiming mark assembly 20 includes a red point light source. A red point optical signal is emitted by the red point light source toward the light splitting surface 151, and is reflected by the light splitting surface 151 towards the light coupling-in region 33 along the infrared image imaging path L1 (L22) perpendicular to the original transmission direction L21. Specifically, the display module 14 is arranged on a side facing the light-entering surface of the beam splitter prism assembly 15, the aiming mark assembly 20 is arranged on a side facing the bottom surface of the beam splitter prism assembly 15, and the aiming mark optical signal is incident to the reflective coating of the light splitting 151 after passing through a part of the beam splitter prism assembly 15, and is fused with the optical signal of the infrared image transmitted through the light splitting surface 151, to thereby superimpose the image of the red light point into the infrared image.

The optical waveguide assembly 39 further includes an optical waveguide eyepiece 31 arranged between the beam splitter prism assembly 15 and the light coupling-in region 33 of the optical waveguide assembly 39. The aiming mark optical signal, after being reflected by the beam splitter prism assembly 15, is fused with the optical signal of the infrared image transmitted through the beam splitter prism assembly 15, and the fused optical signals are incident together to the optical waveguide eyepiece 31 along the infrared image imaging path L1, and are emitted to the light coupling-in region 33 after being converted to parallel light by the optical waveguide eyepiece 31. The aiming mark assembly 20 is a point light source, the aiming mark optical signal is emitted to the reflective coating of the light splitting surface 151 in the form of divergent light, and then emitted from the light exit surface in the form of divergent light after being reflected. The infrared image in the display module 14 is also emitted to the light-transmitting coating of the light splitting surface 151 in a form of divergent light, and is still emitted from the light exit surface in the form of divergent light along the original propagation direction L21 after being transmitted. The optical waveguide eyepiece 31 is parallel to the light exit surface of the beam splitter prism assembly 15 and configured to collimate the light emitted from the light exit surface of the beam splitter prism assembly 15 such that the light passing through the optical waveguide eyepiece 31 is emitted into the light coupling-in region 33 of the optical waveguide assembly 39 in the form of parallel light.

In some embodiments, the infrared light assembly 10 further includes an infrared objective lens 114, an infrared sensor and an infrared image processor. The infrared objective lens 114, the infrared sensor, the infrared image processor, the display module 14 and the beam splitter prism assembly 15 are arranged sequentially along the infrared image imaging path L1. The infrared objective lens 114 is configured to receive infrared light signals within the target field of view; the infrared sensor is configured to receive the infrared light signal collected by the infrared objective lens 114 and convert the infrared light signal into an electrical signal; the infrared image processor is configured to process the electrical signal and generate an infrared image, and the display module 14 is configured to display the infrared image. The infrared objective lens 114 is configured to filter the light in the target field of view, and allow only infrared light signals to pass through. The material of the infrared objective lens 114 can be infrared materials such as zinc sulfide and zinc fluoride. The infrared sensor and the infrared image processor can be integrated on a same circuit board to form an infrared signal processing module. The infrared sensor is configured to gather the infrared light signals passing through the infrared objective lens 114 and generate a corresponding electrical signal through photoelectric conversion. The infrared image processor is configured to receive and process the electrical signal from the infrared sensor and generate a corresponding infrared image signal. The display module 14 is configured to display the image in the display interface thereof according to the infrared image signal. The infrared image processor can perform corresponding enhancement processing on infrared images by loading and running various image enhancement programs.

The infrared light assembly 10 further includes a lens barrel 12, the infrared objective lens 114, the infrared sensor, the infrared image processor, the display module 14 and the beam splitter prism assembly 15 are received inside the lens barrel 12. The infrared objective lens 114 is arranged at a light entrance at the front end of the lens barrel 12; the aiming mark assembly 20 is arranged on the inner wall of the lens barrel 12 and is aligned with the beam splitter prism assembly 15. The lens barrel 12 has a cylindrical shape, the light entrance is arranged at the front end of the lens barrel 12, and the infrared objective lens 114 is arranged at the light entrance for transmitting infrared light signals into the lens barrel 12. The cavity inside the lens barrel 12 is formed as an infrared channel, and the infrared light signal entering the lens barrel 12 through the infrared objective lens 114 travels along the extension direction of the infrared channel and is collected by the infrared sensor. The lens barrel 12 provides support for the installation and fixation of optical devices such as lenses in the infrared light assembly 10 and can absorb stray light incident into the inner surface of the lens barrel 12 to eliminate stray light. In this embodiment, the lens barrel 12 is made of aluminum alloy material. The end of the lens barrel 12 away from the light entrance is a closed end, and the top side of the lens barrel 12 near the closed end is provided with a positioning groove for the optical waveguide assembly 39 passing through, the light coupling-in region 33 of the optical waveguide assembly 39 is arranged at the rear end of the infrared channel in the lens barrel 12, and the optical coupling-out region 34 is arranged outside the lens barrel 12. Optionally, a bracket may be provided on the bottom side of the lens barrel 12, so that the sight imaging system can be installed, through the bracket, on an optical sighting device such as the body of a firearm.

In some embodiments, please refer to FIG.8, the optical waveguide assembly 39 further includes an optical waveguide substrate 32, a first diffractive optical element 351 and a second diffractive optical element 352 arranged on the optical waveguide substrate 32. The light coupling-in region 33 and the light coupling-out region 34 are respectively arranged at opposite ends of the optical waveguide substrate 32, and the first diffraction optical element 351 is arranged on a side of the light coupling-in region 33 away from an incident direction of the optical signal of the infrared image, the second diffractive optical element 352 is arranged on a side of the light coupling-out region 34 close to the incident direction of the visible light signal. The first diffractive optical element 351 and the second diffractive optical element 352 are both relief grating elements, and the microstructures in the relief grating elements for controlling light deflection are formed on the corresponding side surfaces of the light coupling-in region 33 and the light coupling-out region 34 at opposite ends of the optical waveguide substrate 32 by etching. After the optical signal of the infrared image superimposed with the aiming mark is calibrated by the optical waveguide eyepiece 31, the optical signal enters the light coupling-in region 33 of the optical waveguide base 32 in the form of parallel light, and is incident into the first diffractive optical element 351, and the light is reflected at a specific angle by the first diffractive optical element 351 to a region between the two optical reflection planes 321 at opposite sides of the optical waveguide substrate 32, and are transmitted through total reflection between the two optical reflection planes 321, and finally enters the light coupling-out region 34 at a specific angle, and is incident into the second diffractive optical element 352, the light is finally reflected by the second diffractive optical element 352 and then emitted from the side of the light coupling-out region 34 away from the second diffractive optical element 352. The light coupling-out region 34 is arranged on the visible light image imaging path L3, the visible light signal is transmitted in the form of parallel light through the second diffractive optical element 352 and enters the light coupling-out region 34, and along the initial incident direction, the visible light signal and the optical signal of the infrared image superimposed with the aiming mark image reflected by the second diffractive optical element 352 are superimposed and emitted together from the side of the light coupling-out region 34 away from the second diffractive optical element 352, to realize the three-light image fusion of the white light image, the infrared image and the imaged aiming mark. The observation position 40 is arranged on the side where light emerges from the optical waveguide assembly 39, and human eyes can directly observe images at the observation position 40.

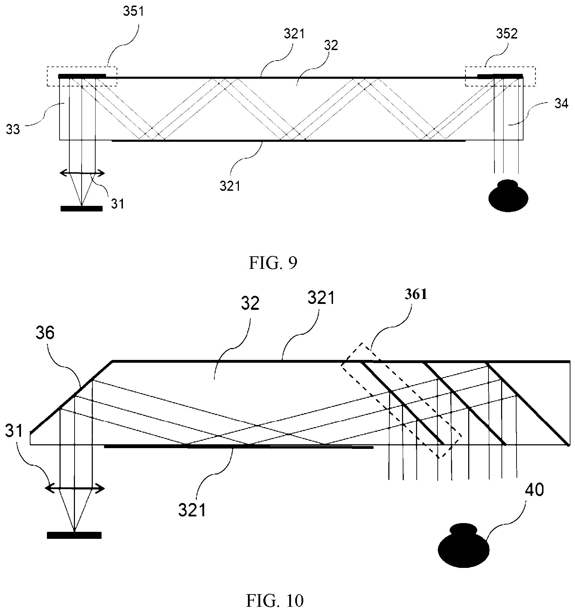

The type of the optical waveguide assembly 39 is not limited to the diffractive optical waveguide described in the above embodiment, as shown in FIG. 9, another optional embodiment of the optical waveguide assembly 39 is provided. The first diffractive optical element 351 and the second diffractive optical element 352 are holographic grating elements, different from the relief grating elements, the microstructure for controlling light deflection in the holographic grating element is formed inside the grating element by etching.

As shown in FIG. 10, another optional embodiment of the optical waveguide assembly 39 is provided. The optical waveguide assembly 39 includes an optical waveguide substrate 32 and a mirror array arranged in the optical waveguide substrate 32, and the light coupling-in region 33 and the light coupling-out region 34 are respectively arranged at opposite ends of the optical waveguide substrate 32, the light coupling-in region 33 is provided with an inclined reflective mirror 36 on the side away from the incident direction of the optical signal of the infrared image. The mirror array includes a plurality of beam splitter mirrors 361 arranged at intervals within the light coupling-out region 34. After the optical signal of the infrared image superimposed with the aiming mark is calibrated by the optical waveguide eyepiece 31, it enters the light coupling-in region 33 of the optical waveguide base 32 in the form of parallel light, and is incident to the inclined reflective mirror 36, and is then incident to the optical reflection plane 321 on the side of the optical waveguide substrate 32 away from the inclined reflective mirror 36 at a specific angle after being reflected by the inclined reflective mirror 36, and finally enters the light coupling-out region 34 at a specific angle after a total reflection by the optical reflection plane 321. Among the plurality of beam splitter mirrors 361 arranged at intervals, the last beam splitter mirror 361 is a total reflection mirror, the front beam splitter mirrors 361 are all semi-transmissive semi-reflective mirrors. When the foremost beam splitter mirror 361 receives lights reflected by the total reflection, the foremost beam splitter mirror 361 reflects a part of the lights out of the optical waveguide substrate 32 and the part of the lights is emitted from the side of the light coupling-out region 34 close to the observation position 40, and the foremost beam splitter mirror 361 transmits the other part of lights to be incident to the next beam splitter mirror 361. When the next beam splitter mirror 361 receives the lights transmitted from its front adjacent beam splitter mirror 361, the next beam splitter mirror 361 reflects a part of the lights out of the optical waveguide base 32 to make the part of the lights to be emitted from the side of the light coupling-out region 34 close to the observation position 40, and transmits the other part of the lights again to make the other part of the lights to be incident to the next beam splitter mirror 361; in the same way, until the last beam splitter mirror 361 receives the lights transmitted from its front adjacent beam splitter mirror 361, all the received light are reflected out of the optical waveguide substrate 32 and are emitted from the side of the light coupling-out region 34 close to the observation position 40. By arranging a plurality of beam splitter mirrors 361 at intervals in the light coupling-out region 34, the exit pupil range of the optical waveguide assembly 39 can be effectively increased.

Optionally, referring to FIG.6 again, the sight imaging system further includes a housing 50. The housing 50 encloses the portion of the optical waveguide assembly 39 that protrudes out of the lens barrel 12. The part, corresponding to the light coupling-out region 34, on the side of the housing 50 close to the incident direction of the visible light is formed as a first transparent window for transmission of visible light signals, and the part, corresponding to the light coupling-out region 34, on the side of the housing 50 close to the observation position 40 is formed as a second transparent window. The size of the space inside the housing 50 can be designed according to the thickness of the optical waveguide assembly 39. In this embodiment, the distance between the first transparent window and the second transparent window is as small as possible under the condition that the optical waveguide assembly 39 can be received in the housing 50, which makes the overall structure of the sight imaging system lighter, and can also reduce the loss of the visible light during transmission. The path of the visible light signal being incident from the first transparent window, being transmitted through the light coupling-out region 34 of the optical waveguide assembly 39 and then being emitted from the second transparent window can be regarded as the visible light image imaging path L3. The channel between the first transparent window and the second transparent window in the housing 50 can be regarded as a visible light channel.

The sight imaging system provided by the above embodiments of the present application has at least the following characteristics:

Firstly, the infrared image in the display module 14 functions as the light source system of the optical waveguide assembly 39, the infrared image superimposed with the optical signal of the aiming mark is incident into the optical waveguide assembly 39 in the form of an optical signal, and is transmitted to human eye observation position 40 aligned with the visible light image imaging path L3 through the optical waveguide assembly 39. By utilizing optical waveguide transmission to replace the traditional complex mirror imaging system, the multi-channel optical signal fusion of infrared light, visible light and aiming mark light can be realized, which can greatly simplify the structure of the sight imaging system and realize the purpose of overall lightweight.

Secondly, the optical waveguide assembly 39 can receive optical signals through the light coupling-in region 33 with a larger area such that a wider field of view of a scene can be received. The optical waveguide assembly 39 has a multi-dimensional pupil expansion function, and the users can see the complete fused image at the observation positions 40 in different directions, which allows the users to see the complete field of view of the sight in a larger range and to realize multi-dimensional exit pupil observation purpose.

Thirdly, by utilizing the beam splitter prism assembly 15 arranged behind the display module 14, the aiming mark optical signal emitted by the aiming mark assembly 20 is superimposed into the infrared image, and is transmitted with the optical signal of the infrared image by the same optical path along the infrared image imaging path L1 and is then incident to the human eye in the form of parallel light after being transmitted by the waveguide assembly 39. The imaging of the aiming mark forms an infinite virtual image in the human eye, and the infinite virtual image and the observed target can be used together for aiming, therefore, the sight can acquire the target no matter how the human eye deviates, to avoid parallax caused by shaking while aiming, which is especially suitable for aiming at targets in motion scenes.

Fourthly, the sight imaging system can be applied to other optical sighting device, such as a combined sighting system combining with shotguns. It can not only realize aiming a target by utilizing dual channels which includes infrared light and visible light together with red dot for all-weather observation and accuracy aiming target under complex conditions. The combined sighting system has the characteristics of light weight, small volume, hardly blocking the direct field of view, using one-dimensional or two-dimensional pupil expansion technology, simple structure, easy assembly and low cost.

Please refer to FIG.11 to FIG.13, taking the specific implementation of the optical system as an optical display device as an example, the pupil expansion visual module is a two-dimensional pupil expansion module formed by a combination of an optical waveguide assembly 39 and a beam splitter array 37, the waveguide assembly 39 refers to the optical waveguide sheet in the embodiment of the optical display device, the light-entering module 11 mainly includes an infrared objective lens 114, and the optical signal in the imaging optical path is infrared light.

Please refer to FIG. 11, an optical display device according to an embodiment of the present application includes a two-dimensional pupil expansion module composed of a beam splitter array 37 and an optical waveguide sheet, the image beam is transmitted to the optical waveguide sheet through the beam splitter array 37. The beam splitter array 37 is configured to expand the light beam in the first dimension, and the optical waveguide plate is configured to expand the light beam in the second dimension, the first dimension and the second dimension intersect with each other, so that the beam splitter array 37 and the optical waveguide plate expands the image beam on a two-dimensional plane formed by the intersection of the first dimension and the second dimension. By combining the beam splitter array 37 and the optical waveguide plate, the image beam can be expanded in two different dimensions, to realize two-dimensional pupil expansion. The optical waveguide sheet is a geometric optical waveguide or a diffractive optical waveguide. Compared with only using a diffractive optical waveguide for two-dimensional pupil expansion, using combination of the beam splitter array 37 and the optical waveguide plate greatly reduces the process requirements for material processing. The beam splitter array 37 has a simple structure and is easy to produce, at the same time, it can avoid large colour deviations in the first dimension and improve image quality. The optical waveguide plate only needs to realize one-dimensional pupil expansion and thus the difficulty of design in structure of the geometric light waveguide structure or diffraction grating structure design are lower, to thereby reduce the process requirements for material processing, and production costs and processing difficulty, and improve competitiveness of the product in the market.

Please continue to refer to FIG.11, in one embodiment, the beam splitter array 37 includes a plurality of beam splitter prisms 371. The plurality of beam splitter prisms 371 is sequentially arranged in one direction along the first dimension to form a beam splitter prism group. The beam splitter prism 371 can be a cube structure formed by gluing two right-angle prisms, the light splitting surface is formed by plating a multi-layer coating structure on the glued inclined surface of the two right-angle prisms, so that the light splitting surface has the function of partial transmission and partial reflection, that is, while a light beam is incident to the light splitting surface, a part of the light beams is reflected, and another part of the light beam is transmitted. In this way, after the image light beam enters into the beam splitter array 37, it passes through the beam splitter prisms 371 in sequence, the previous beam splitter prism 371 transmits a part of the light beams to be emitted out of the beam splitter array 37, and reflects another part of the light beam to the next beam splitter prism 371 for continued reflection and transmission. Thus, the light beam emitted from the beam splitter array 37 is expanded on the first dimension, that is, the exit pupil area of the image in the first dimension is expanded.

The plurality of beam splitter prisms 371 can be arranged in close contact with each other, or can be arranged at even intervals, so that the distances between the multiple beams emitted by the beam splitter array 37 are equal and uniform pupil expansion can be realized. In the embodiment shown in FIG. 11, the multiple beam beam splitter prisms 371 of the beam splitter prism group contact with each other. The beam splitter prism 371 has a light-entering surface, a reflective light output surface and a transmitting light output surface. The light-entering surface of the beam splitter prism 371 configured for receiving the incident beam faces the incident direction of the light beam, the reflective light output surface contacts with the adjacent beam splitter prism 371, and the transmitting light output surfaces of the remaining beam splitter prisms 371 are fit with the light-entering surface of the next beam splitter prism 371.

Referring to FIG.12, in another embodiment, the beam splitter array 37 may further include two beam splitter prism groups, and the two beam splitter prism groups are symmetrically arranged in the first dimension. One beam splitter prism group includes a plurality of beam splitter prisms 371 sequentially arranged along a direction of the first dimension, and the other beam splitter prism group includes a plurality of beam splitter prisms 371 sequentially arranged in an opposite direction of the first dimension, and two first beam splitter prisms 371 in the beam splitter prism groups which receive the incident light beam along the light beam transmission direction are in contact with each other. In this way, the image beam can simultaneously enter into the first beam splitter prisms 371 of the two beam splitter prism groups along the light beam transmission direction perpendicular to the first dimension and be conducted to the last beam splitter prism 371 located at the end of the corresponding beam splitter prism group. The image beam is reflected and transmitted by the beam splitter prism 371, so that the image beam can be simultaneously transmitted along two directions of the first dimension. Thus, the light beam will be emitted with a larger size of pupil expansion, to increase the pupil expansion range in the first dimension and to enhance the pupil expansion effect.

In the beam splitter array 37, the beam splitting surfaces of the plurality of beam splitter prisms 371 are inclined to the first dimension. In the embodiment shown in FIG.11, the angle between the first dimension and the light splitting surfaces of the light splitting prism 371 is preferably 45°. In the embodiment shown in FIG.12, the angles between the light splitting surfaces of the light splitting prism 371 of one light splitting prism group and the first dimension are preferably 45°, and the angles between the light splitting surfaces of the light splitting prism 371 of the other light splitting prism group and the first dimension are preferably 135°, so that the two beam splitter prism groups are symmetrically arranged on opposite sides of the incident direction of the light beam. However, this application does not limit the angle formed between the light splitting surface and the first dimension, as long as at least part of the light beam transmitted in the beam splitter array 37 can be optically coupled into the optical waveguide plate. In practical applications, the angle can be set according to the size of the beam splitter array 37, the size of the optical waveguide plate, and the direction requirements for the first dimension, it is preferable to make the overall structure lighter and thinner while meeting the requirement for light beam expansion.

In order to make the light intensity of the multiple exit light beams emitted by the beam splitter array 37 to be the same and to make the intensity of each expanded exit pupil image to be uniform, in the first dimension, the ratio of the transmittance/reflectance T/R of the multiple beam splitter prisms 371 (T represents transmittance, R represents reflectance) can be set with different values. Specifically, the ratio of the transmittance/reflectance of each beam splitter prism 371 can be determined according to the number of the beam splitter prisms 371 and the light emission requirements, for example, when there are two beam splitter prisms 371, according to the order in which the beam splitter prisms 371 of the beam splitter array 37 receive the light beam, the ratio of the transmittance/reflectance T/R of the first beam splitter prism 371 can be 1/2, and the ratio of the transmittance/reflectance T/R of the second beam splitter prism 371 can be 1/1. If there are three beam splitter prisms 371, the ratio of the transmittance/reflectance T/R of the first beam splitter prism 371 can be 1/3, the ratio of the transmittance/reflectance T/R of the second beam splitter prism 371 can be 2/1, the ratio of the transmittance/reflectance T/R of the third beam splitter prism 371 can be 1/1, and so on. That is, when a beam splitter prism group includes a number of n beam splitter prisms 371, the ratio of the transmittance/reflectance T/R of the first beam splitter prism 371 which receives the incident light from the beam transmission direction is 1/n, and the ratio of the transmittance/reflectance T/R of the second beam splitter prism 371 is (n-1)/1,..., and the ratio of the transmittance/reflectance T/R of the n-th beam splitter prism 371 is 1/1.

In the embodiment shown in FIG. 12, the beam splitter prisms 371 are arranged symmetrically in the first dimension, the ratio of the transmittance/reflectance of the three beam splitter prisms 371 of the upper beam splitter prism group from bottom to top are 1/3, 2/1, and 1/1 respectively, and the ratio of the transmittance/reflectance of the three beam splitter prisms 371 of the bottom beam splitter prism group from top to bottom are 1/3, 2/1, and 1/1 respectively.

When the optical waveguide plate is a geometric optical waveguide plate, its structure is similar to the beam splitter array 37 of a single beam splitter prism group and not described again here. When the optical waveguide plate is a diffractive optical waveguide plate, a coupling-in grating and a coupling-out grating can be embedded inside the optical waveguide plate. The light beam entering the optical waveguide is coupled in through the coupling-in grating and coupled out from the coupling-out grating, the pupil expansion in the second dimension can be realized by the light coupling-in and coupling-out. The first dimension and the second dimension are preferably perpendicular to each other, so that the pupil expansion has more specific direction. Both the coupling-in grating and the coupling-out grating can be surface relief gratings or holographic volume gratings.

In addition, embodiments of the present application also provide an optical display system which can be applied to optical display devices, such as glasses and head-mounted goggles. Referring to FIG. 11 or FIG.12, the optical display system of the illustrated embodiment includes an infrared objective lens 114 for collecting infrared light signals in the target field of view of scene, an infrared image processor 131 that processes the infrared light signals and generates a corresponding infrared image, a collimating lens that amplifies and collimates the light beam of the infrared image and a two-dimensional pupil expansion module of the aforementioned embodiment. The infrared image generated by the infrared image processor 131 enters into the two-dimensional pupil expansion module after being collimated and uniformed by the collimating lens, and is then coupled out to the human eye through twice pupil expansion by the beam splitter array 37 and the optical waveguide plate. Since the optical waveguide plate is formed of a light-transmitting medium and can be embedded in the transparent material substrate of the optical display device, when the human eye views the surrounding environment, the two-dimensional pupil expansion module projects the infrared image obtained by processing the infrared light signal to the human eye to be imaged, at the same time, the human eye can receive external visible light signals through the light-transmitting medium to observe the real external world, so that the infrared image and the real scene can be fused. The fusion of infrared light and white light can be realized. The human eye can observe the fusion image of infrared light and white light, to effectively observe the target area in complex environments. At the same time, since the optical display system adopts all the technical solutions of the foregoing embodiments, it has at least all the beneficial effects brought by the technical solutions of the foregoing embodiments, which will not be described again one by one.

Specifically, the infrared objective lens 114 is configured to collect and image the light in the infrared band of the thermal radiation of the target in the field of view. The focal length of the infrared objective lens 114 can be designed according to the size of the field of view, and the material of the infrared objective lens 114 can be one of germanium, silicon, or other materials. The infrared image processor 131 includes an infrared sensor, a signal processing system and a display screen. The infrared sensor is configured to receive the image formed by the infrared objective lens 114, the signal processing system is configured to convert the infrared light signal received by the infrared sensor into an electrical signal and to send the electrical signal to the display screen, and the display screen is configured to display the corresponding infrared image according to the electrical signal, and emit the displayed infrared image in the form of a light beam. The collimating lens is made of glass or plastic material that can transmit visible light, and is configured to amplify and collimate the light beam of the infrared image such that the light beam of the infrared image is incident into the beam splitter array 37 in the form of parallel light. In this way, during the processing of infrared light signals from optical signals to electrical signals, and then from electrical signals to optical signals, the signal processing system can provide an independent image enhancement for the infrared image, and the infrared image after image enhancement processing is displayed on the display screen such that the output infrared image has a uniform brightness and high resolution.

The optical display system of the embodiment of the present application further includes a light combiner 22 and a red dot light source. The light combiner 22 is arranged between the display screen of the infrared image processor 131 and the collimating lens. The red dot light source is configured to emit a red dot light beam. Specifically, the light combiner 22 may be a flat structure made of glass or other transparent materials, and includes a first light-entering surface 221 and a second light-entering surface 222 arranged oppositely. The first light-entering surface 221 faces the incident direction of the light beam of the infrared image generated by the display screen, the second light-entering surface 222 faces the incident direction of the red dot beam emitted by the red dot light source, the light beam of the infrared image is fused with the red dot beam while passing through the light combiner 22 and then enters into the collimating lens. In this way, by setting the light combiner 22 to fuse the red dot beam and the light beam of the infrared image, the fusion of infrared light, white light and red dots can be realized. When a human eye observes the outside world through the optical waveguide plate, the real image of the outside world, the infrared image and the red dot image are all displayed near the eye such that the human eye can observe the fusion image of infrared light, white light and red dots, which facilitates users to observe the real environment and to capture and position thermal imaging lives. The position of the red dot displayed by the human eye relative to the overall infrared image remains unchanged, the red dot can play a role in aiming and positioning, to allow the user to control the moving distance by using the red dot as a reference while moving the infrared objective lens 114 to observe infrared images in different areas. For example, the optical display system of the embodiment of the present application can be utilized in the field of sights, the infrared objective lens 114 is utilized as a sighting lens and is installed on a shooting device, the muzzle of the shooting device points to the center of the field of view of the infrared objective lens 114. The remaining components of the optical display system are arranged on a near-eye display device, the human eye can observe the fused image of infrared light, white light and red dots, and the relative position of the red dots and the infrared image remains unchanged. That is, the position of the red dot corresponding to the infrared image is consistent with the position of the muzzle of the shooting device corresponding to the real environment. While shooting a target, the user can adjust the angle of the shooting device and adjust the muzzle of the shooting device to aim at the target by the infrared image formed by the red dot aiming at the target.

More specifically, the first light-entering surface 221 or the second light-entering surface 222 of the light combiner 22 is coated with a semi-transparent and semi-reflective coating. The semi-transparent and semi-reflective coating is configured to transmit the light beam of the infrared image and reflect the red dot light beam, or transmit the red dot beam and reflect the light beam of the infrared image. In the shown embodiment, the semi-transparent and semi-reflective coating is arranged on the second light-entering surface 222, and the light beam of the infrared image emitted by the infrared image processor 131 is emitted along a direction perpendicular to the first dimension and is transmitted through the semi-transparent and semi-reflective coating to the collimating lens; the red dot beams emitted by the red dot light source is emitted along a direction parallel to the first dimension, the plane, where the light combiner 22 is arranged, is at an angle of 45° relative to the first dimension, so that after the red dot beam is reflected by the semi-transparent and semi-reflective coating, the red dot beam is emitted to the collimating lens along a direction parallel to the light beam of the infrared image, to realize the fusion of the light beam of the infrared image and the red dot beam. Of course, in other embodiments, the positions of the red dot light source and the display screen can also be interchanged, so that the red dot beam is transmitted through the semi-transparent and semi-reflective coating, and the light beam of the infrared image is reflected by the semi-transparent and semi-reflective coating. According to the installation positions of the infrared image processor 131 and the red dot light source, the installation angle of the light combiner 22 can also be changed accordingly, as long as the light beam of the infrared image and the red dot light beam are emitted in the same direction after passing through the light combiner 22.

Preferably, the red dot light source and the infrared image processor 131 are in conjugate positions relative to the light combiner 22, so that the red point light beam is in the center of the infrared image after the light beam of the infrared image and the red point light beam being fused. When the human eye observes the infrared image formed by the optical waveguide plate, the red dot is always in the center of the image, which is more conducive to aiming and positioning.

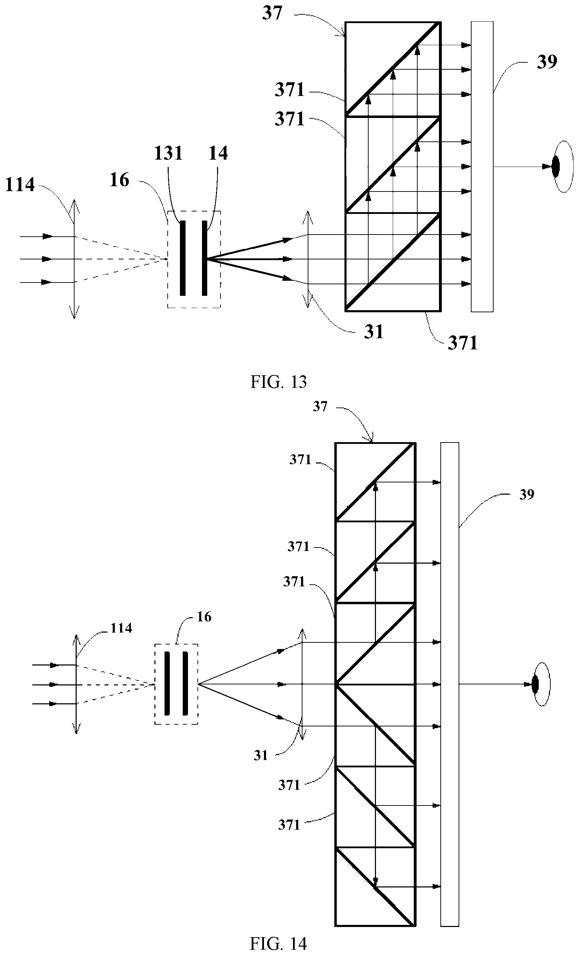

In some embodiments, the optical display device may not include a red dot function. Referring to FIG.13 and FIG.14, the optical display device includes a light-entering module, an imaging module and a two-dimensional pupil expansion module. The light-entering module and the imaging module are still taken the infrared imaging assembly as an example, and mainly includes an infrared objective lens 114 for collecting infrared light signals in the target scene, an infrared image processor 131 which processes the infrared light signals and generates corresponding infrared images, and a display module 14 for displaying infrared image. The two-dimensional pupil expansion module can be a combination of the beam splitter array 37 including a single beam splitter prism group and the optical waveguide assembly 39 as described in the previous embodiment, or it can also be a combination of the beam splitter array 37 including two symmetrically arranged beam splitters prism groups and the optical waveguide assembly 39.

To sum up, the two-dimensional pupil expansion module of the embodiment of the present application utilizes the beam splitter array 37 to expand the pupil in the first dimension, and utilizes the optical waveguide plate to expand the pupil in the second dimension. Thus, two-dimensional pupil expansion is realized through a combination of the two one-dimensional pupil expansions, which reduces material machining process requirements compared with simply using diffraction light waveguides for two-dimensional pupil expansion. The beam splitter array 37 is composed of multiple beam splitter prisms 371 arranged in an array, which simplifies the structure of the beam splitter prisms 371, and at the same time, reduces production cost and processing difficulty. The optical display system equipped with the two-dimensional pupil expansion module has low manufacturing cost, small size, can realize the fusion of infrared light and white light, and therefore can be used in wide application fields, resulting in high product competitiveness in the market.

On the other hand, a combined sighting system according the embodiment of the present application is provided. The combined sighting system includes an optical sighting device and the optical system of the embodiment of the present application. The optical system can be utilized as a front sight accessory for the optical sighting device and is assembled on the body of the optical sighting device to provide precise aiming.

Optionally, the optical sighting device can be various devices which require the use of imaging to observe specific targets within the target field of view, such as shooting devices, telescopes, infrared thermal imaging cameras, etc. Taking the gun of the shooting device as an example, the front sight is installed on the shooting device, the muzzle of the shooting device points to the center of the field of view in the imaging light path of the optical system, and the observation position 40 is arranged on the near-eye display device, so that the human eye can directly observe the fusion image of multi-channel optical signals formed by the optical system, and based on the position of the aiming mark optical signal in the fusion image of multi-channel optical signals being consistent with the position of the muzzle of the shooting device corresponding to the real environment, the aiming is realized. While shooting a target, the user can adjust the angle of the shooting device and adjust the muzzle of the shooting device to aim at the target through the image formed by aiming at the target with the aiming mark.

The above embodiments are merely preferred ones of the invention. It should be pointed out that these preferred embodiments should not be construed as limitations of the invention, and the protection scope of the invention should be defined by the claims. Those ordinarily skilled in the art can make some improvements and embellishments without departing from the spirit and scope of the invention, and all these improvements and embellishments should also fall within the protection scope of the invention.

## Claims

1. An optical system, **characterized by** comprising a light-entering module (11), an imaging module (16), and a pupil expansion visual module (30);
wherein the light-entering module (11) is configured to collect optical signals within a target field of view and to converge the optical signals to the imaging module (16);
the imaging module (16) comprises an image processing unit (13) and a display module (14), the image processing unit (13) is configured to convert the optical signals into an image to be displayed by the display module (14);
the pupil expansion visual module (30) comprises an optical waveguide assembly (39) which comprises a light coupling-in region (33) and a light coupling-out region (34) respectively corresponding to the display module (14) and an observation position, and the image displayed in the display module (14) is incident into the light coupling-in region (33) in the form of an optical signal, transmitted to the light coupling-out region (34) through the optical waveguide assembly (39) , and coupled out from the light coupling-out region (34) to the observation position (40).

2. The optical system according to claim 1, **characterized in that** the optical waveguide assembly (39) comprises an optical waveguide eyepiece (31) and an optical waveguide substrate (32), the light coupling-in region (33) and the light coupling-out region (34) are respectively formed at opposite ends of the optical waveguide substrate (32), and the optical waveguide eyepiece (31) is arranged at front of the light coupling-in region (33) and configured to amplify and convert optical signals of the image displayed in the display module (14) into parallel optical signals.

3. The optical system according to claim 2, **characterized in that** the optical waveguide assembly (39) further comprises a first diffractive optical element (351) and a second diffractive optical element (352) arranged on the optical waveguide substrate (32), the first diffraction optical element (351) is arranged on a side of the light coupling-in region (33) away from an incident direction of the optical signals of the image, and the second diffractive optical element (352) is arranged on another side of the light coupling-out region 34 away from the observation position (40).

4. The optical system according to claim 3, **characterized in that** the first diffractive optical element (351) and the second diffractive optical element (352) are holographic grating elements, or relief grating elements.

5. The optical system according to claim 2, **characterized in that** the optical waveguide assembly (39) further comprises a mirror array arranged in the optical waveguide substrate (32), the light coupling-in region (33) is provided with an inclined reflective surface on a side away from the incident direction of the optical signals of the image, the mirror array comprises a plurality of beam splitter mirrors arranged at intervals within the light coupling-out region (34).

6. The optical system according to claim 1, **characterized by** further comprising an aiming mark assembly (20), wherein the aiming mark assembly (20) comprises a light combiner (22) and an aiming mark light source (21); the light combiner (22) is arranged between the display module (14) and the optical waveguide assembly (39), and comprises a first light-entering surface (221) facing the display module (14) and a second light-entering surface (222) facing the aiming mark light source (21), the image displayed in the display module (14) is emitted to the first light-entering surface (221) in the form of an optical signal, transmitted through the light combiner (22) and then emitted to the optical waveguide assembly (39), the aiming mark optical signal emitted by the aiming mark light source (21) is emitted to the second light-entering surface (222), and then emitted to the optical waveguide assembly (39) after being reflected by the second light-entering surface (222).

7. The optical system according to claim 6, **characterized in that** the incident direction in which the optical signal of the image is incident to the first light-entering surface (221) and the incident direction in which the aiming mark optical signal is incident to the second light-entering surface (222) are perpendicular to each other.

8. The optical system according to claim 6, **characterized in that** the aiming mark light source (21) comprises a red dot light source, the red dot light source is configured to emit a red dot light signal towards the second light-entering surface (222), the red dot light signal is emitted with the optical signal of the image towards the optical waveguide assembly (39) along a same optical path after being reflected by the second light-entering surface (222),

9. The optical system according to claim 6, **characterized in that** the imaging module (14) is an infrared imaging module, the image processing unit (13) comprises an infrared sensor and an infrared image processor (131);
the light-entering module (11) comprises an infrared objective lens (114);
the infrared objective lens (114) is configured to receive an infrared light signal within the target field of view; the infrared sensor is configured to receive the infrared light signal collected by the infrared objective lens (114) and convert the infrared light signal into an electrical signal; the infrared image processor (131) is configured to process the electrical signal, and the display module (14) is configured to display an infrared image formed from the electrical signal processed by the display module (14); and
the aiming mark optical signal and the infrared image displayed in the display module (14) are incident into the light coupling-in region (33) in the form of an optical signal, transmitted to the optical coupling output region (34) through the optical waveguide assembly (39), fused with a visible light signal transmitted through the optical waveguide substrate (32) in the optical coupling output region (34), and coupled out to the observation position (40) through the optical coupling output region (34).

10. The optical system according to claim 9, **characterized in that** the infrared imaging module further comprises a lens barrel (12), the infrared objective lens (114), the infrared sensor, the infrared image processor (131), the display module (14) and the light combiner (22) are received inside the lens barrel (12);
the infrared objective lens (114) is arranged at a light entrance at the front end of the lens barrel (12); and
the aiming mark assembly (20) is arranged on the inner wall of the lens barrel (12) and is aligned with the light combiner (22).

11. The optical system according to claim 1, **characterized in that** the light-entering module (11) includes a folding lens group (115), an objective lens, and the folding lens group (115) is configured to reflect the optical signals incident thereto multiple times to form a folded optical path, the optical signals are finally reflected to the objective lens (113), the optical signals are emitted to the imaging module (14) after being refracted and converged by the objective lens.

12. The optical system according to claim 11, **characterized in that** the folding lens group (115) comprises a primary reflective mirror (111) and a secondary reflective mirror (112); the secondary reflective mirror 112, the primary reflective mirror (111) and the objective lens are arranged in sequence along the incident direction of the optical signal;
the primary reflective mirror (111) comprises a light-entering part (113) and a light transmitting part (114), the light-entering part (1113) is configured to receive the optical signals incident thereto and reflect the optical signals to the secondary reflective mirror (112), the secondary reflective mirror (112) is configured to reflect the optical signals reflected by the light-entering part (1113) to the light transmitting part (1114) such that the optical signals transmit through the light transmitting part (1114) and then are emitted to the objective lens.

13. The optical system according to claim 12, **characterized in that** the size of the primary reflective mirror (111) in a radial direction is larger than that of the secondary reflective mirror (112), and the part of the primary reflective mirror (111) that extends beyond the secondary reflective mirror (112) in the radial direction is formed as the light-entering part (1113).

14. The optical system according to claim 12, **characterized in that** both the primary reflective mirror (111) and the secondary reflective mirror (112) are curved lenses, a side of the primary reflective mirror (111) facing the incident optical signal is concave, and a side of the secondary reflective mirror (112) facing the primary reflective mirror (111) is convex;
the light transmitting part (1114) comprises a perforation aligned with the secondary reflective mirror (112) and the objective lens (113) in the optical axis direction, and the size of the perforation is smaller than or equal to the secondary reflective mirror (112).

15. The optical system according to claim 1, **characterized in that** the optical signals are infrared light signals or visible light signals; and
the optical system further comprises a light entrance window corresponding to the light coupling-out region (34), the light coupling-out region (34) allows optical signals entering from the light entrance window to be transmitted there through, so that the target field of view can be directly observed through the light coupling-out region (34) and the light entrance window while the image of the target field of view formed by the imaging module (16) is being observed at the observation position (40).

16. The optical system according to claim 1, **characterized in that** the pupil expansion visual module (30) further comprises a beam splitter array (37) configured to expand light beam in a first dimension, and the optical waveguide assembly is configured to expand the light beam in a second dimension, the first dimension and the second dimension are intersect;
the beam splitter array (37) comprises a beam splitter prism group which includes a plurality of beam splitter prisms (371) sequentially arranged in a direction along the first dimension, one of the beam splitter prisms (371) is configured to transmit a part of the optical signal of the image incident thereto out of the beam splitter array (37), and to reflect another part of the optical signal of the image incident thereto to a next adjacent beam splitter prism (371), the remaining beam splitter prisms (371) are configured to reflect a part of reflected light beams from its adjacent beam splitter prism (371) out of the beam splitter array (37), and to transmit another part of the reflected light beams to its another adjacent beam splitter prism (371).

17. The optical system according to claim 16, **characterized in that** the beam splitter array (37) comprises two beam splitter prism groups symmetrically arranged in the first dimension, two beam splitter prisms (371) in the beam splitter prism groups which receive the incident optical signal of the image are in contact with each other.

18. The optical system according to claim 16, **characterized in that** each beam splitter prism group comprises a number of n beam splitter prisms (371) arranged sequentially in the direction along the first dimension, and a ratio of the transmittance/reflectance of the number of n beam splitter prisms (371) is sequentially 1/n, (n-1)/1,••••••, 1/1.

19. A combined sighting system, **characterized by** comprising an optical sighting device and an optical system according to any one of claims 1 to 18.

20. The combined sighting system according to claim 19, **characterized in that** the optical sighting device is one of the following: a firearm, a telescope, or an infrared thermal imager.
